(19)

Europäisches
Patentamt
European
Patent Office
Office européen
des brevets

(11) **EP 1 929 674 B1**

(12) **EUROPEAN PATENT SPECIFICATION**

(45) Date of publication and mention
of the grant of the patent:
**17.02.2010 Bulletin 2010/07**

(21) Application number: **06779159.0**

(22) Date of filing: **17.08.2006**

(51) Int Cl.:
*H04B 13/00* (2006.01)      *G06G 7/60* (2006.01)
*G06N 3/00* (2006.01)

(86) International application number:
**PCT/GB2006/003087**

(87) International publication number:
**WO 2007/020452 (22.02.2007 Gazette 2007/08)**

(54) **METHOD AND APPARATUS FOR CONFIGURING A COMMUNICATION CHANNEL**

VERFAHREN UND VORRICHTUNG ZUM KONFIGURIEREN EINES KOMMUNIKATIONSKANALS

PROCEDE ET APPAREIL DE CONFIGURATION D'UN CANAL DE COMMUNICATIONS

(84) Designated Contracting States:
**AT BE BG CH CY CZ DE DK EE ES FI FR GR HU
IE IS IT LI LT LU LV MC NL PL PT RO SE SI SK TR**

(30) Priority: **19.08.2005 GB 0517046
07.08.2006 GB 0615643**

(43) Date of publication of application:
**11.06.2008 Bulletin 2008/24**

(73) Proprietor: **University of Plymouth Enterprise
Limited
Plymouth
Devon PL4 8AA (GB)**

(72) Inventor: **HARRIS, Cristopher
Plymouth PL4 8AA (GB)**

(74) Representative: **Wardle, Callum Tarn et al
Withers & Rogers LLP
Goldings House
2 Hays Lane
London
SE1 2HW (GB)**

(56) References cited:
**GB-A- 2 265 036      US-A- 4 987 897
US-A- 5 781 648      US-A- 5 822 742
US-B1- 6 691 073**

**Description**

The present application relates to a method and apparatus for configuring a communication channel prior to the transmission of a signal along the channel such that a desired noise characteristic of the channel is achieved.

Within the human body a great number of electrical signals are being constantly transmitted over an equally great number of communication channels in the form of signals being passed, for example, between the brain and the various muscles of the body. For example, to move ones arm requires a number of signals to be sent from the brain to the various muscles via various neurological channels. As in most communication channels, those within the body introduce a certain amount of noise to the transmitted signal. It has been found that the noise characteristics of the neurological channels within the human body result in the introduced noise being "proportional noise" (sometimes referred to as multiplicative noise or scalar noise), by which it is meant that the standard deviation of the noise is proportional to the signal strength. This is markedly different to conventional engineered communications systems in which either a) the noise is assumed to be additive and independent of the underlying signal, or b) the noise has a Poisson (or Renewal) distribution in which the standard deviation is proportional to the square root of the signal strength.

As increasing endeavours are made to artificially simulate the neurological behaviour of the human body, for example in the fields of artificial intelligence using neural networks and prosthetic limbs that are actuated by the patient's own neurological systems, the behaviour of the chosen communication channel in such simulated systems is of an increasing importance. The identification by the current applicant that the current communication channels within the human body follow a proportional noise model compared with a Poisson noise model that has previously been assumed in artificial systems introduces the desire to configure a communications channel to exhibit a noise characteristic substantially the same as that found to be exhibited in natural neurological systems.

GB2,265,036 (D1) describes a linear algebraic processor, for instance for performing vector matrix multiplications as part of a neural network, having light emitting diode strips on one substrate which are illuminated in accordance with the values of elements of an input vector. Photodiode strips are arranged orthogonally to the light emitting diode strips on another substrate. A ferro-electric liquid crystal layer is disposed between the strips and provided with polarisers and electrodes to permit the light attenuation properties of each matrix element between facing portions of the light emitting diode strips and photodiode strips to be varied and stored in a non-volatile way. The optical attenuation represents the values of the elements of the matrix and the outputs of the photodiode strips represent the values of the elements of an output vector formed as the product of the input vector and matrix.

According to a first embodiment of the present invention there is provided a method of configuring a communication channel prior to the transmission of an input signal along the communication channel, the communication channel comprising a plurality of sub-channels, the method being characterised by comprising determining the strength of the input signal and in accordance with the determined signal strength, selecting a set of the plurality of sub-channels and transmitting said input signal along the set of sub-channels in parallel, wherein each of the sub-channels has a predetermined noise characteristic such that the set of selected sub-channels exhibits a combined noise characteristic in which the standard deviation of the noise is proportional to the signal strength.

Each sub-channel is preferably selected only if the instantaneous input signal strength exceeds an individual threshold value associated with each sub-channel.

The noise characteristic of each sub-channel is preferably defined by a gain function associated with each sub-channel and a constant weighting value $w_i$ applied to the output of each sub-channel.

Additionally, the distribution of the weighting values w(x) and the distribution of sub-channels having a threshold value equal to the instantaneous signal strength p(x) may be derived from equations relating w(x), p(x), the gain and noise function and variance of the sub-channels. The equations may be so lved by numerical methods.

In some embodiments, the input signal may have a minimum instantaneous value ε and the total number N of sub-channels may be determined from an equation relating N, ε, and ρ(x).

According to a further aspect of the present invention there is provided apparatus for configuring a communication channel comprising a plurality of sub-channels, characterised by each sub-channel having a threshold switch arranged to receive an input signal having an instantaneous signal value and to connect the sub-channel to the input signal only if the instantaneous signal value exceeds a predetermined threshold value, the apparatus further comprising a summator arranged to receive the output of each sub-channel and combine said outputs to provided a combined output signal, wherein each sub-channel has a predetermined noise characteristic such that the connected sub-channels exhibit a combined noise characteristic in which the standard deviation of the noise is proportional to the signal strength.

Preferably each sub-channel may include a constant gain unit arranged to apply a constant weighting value $w_i$ to the output of each sub-channel prior to the output being provided to the summator and each sub-channel may have a further gain function associated with it, such that the noise characteristic of each sub-channel is defined by said gain function and said constant weighting value $w_i$.

Embodiments of the present invention are described below, by way of illustrative example only, with reference to the accompanying figures, of which:

Figure 1 schematically illustrates a plurality of communication channels configured according to embodiments of the present invention;

Figures 2a & 2b illustrates examples of sub-channel responses for embodiments of the present invention;

Figure 3 schematically illustrates an arrangement of sub-channels having a step gain function according to an embodiment of the present invention;

Figure 4 illustrates the output of the communications channel shown in figure 3;

Figure 5 illustrates the standard deviation of the noise of the communications channel of figure 3;

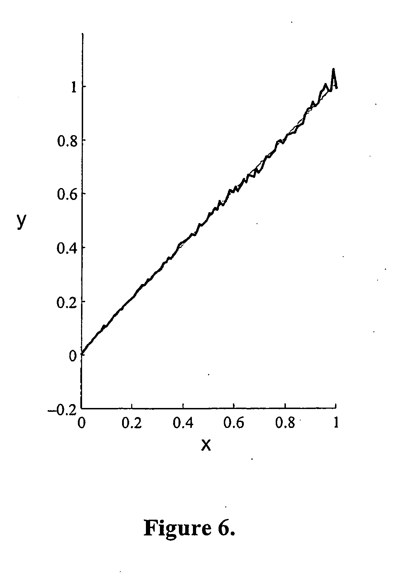

Figure 6 illustrates the output of a communications channel configured according to a further example of the present invention; and

Figure 7 illustrates the standard deviation of the noise of the communications channel of figure 6.

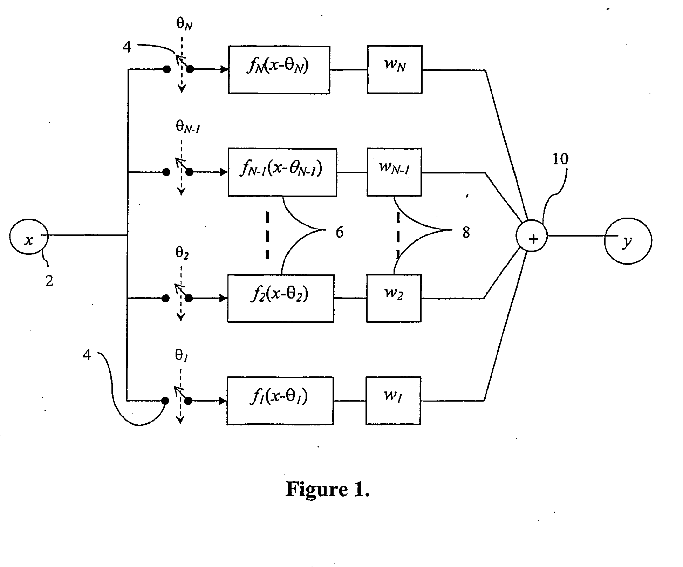

With reference to Figure 1, an input signal source 2 is connected to N threshold switches 4 (N being a positive integer number) connected in parallel. Each threshold switch 4 is arranged to be activated only if the instantaneous value of the input signal exceeds a predetermined threshold level $\theta_i$, where $i$ = 1 to N (i.e. the threshold level for each threshold switch 4 is individually set). When activated, each threshold switch 4 connects the input signal source to one of a plurality of communication sub-channels 6, each sub-channel having a gain function $f(x)$. The threshold switches may be implemented using operational amplifiers or transistors and appropriate reference voltages, although it will be appreciated by those skilled in the art that other appropriate thresholding techniques may be used. The output of each sub-channel is weighted by a constant weight w applied by means of a fixed gain unit 8 (such as a fixed gain amplifier) before being added together by a summator (or demultiplexor) 10 to provide a combined output signal $y$.

As mentioned above, the value of the input signal varies over time $t$ and can thus be expressed as x(t) where $0 \leq x(t) \leq x_{max}$. Similarly, the output signal can be expressed as $y(t)$, where $0 \leq y(t) \leq y_{max}$. The explicit dependence on time $t$ will be dropped in the following explanation except for emphasis.

In embodiments of the present invention there are $N$ sub-channels. The input and output of the ith sub-channel ($1 \leq i \leq N$) are non-negative and denoted by and $x_i$ and $y_i$ respectively. When a sub-channel is activated (or switched ON), the transfer of signal is given by the gain function:

$$y_i = f_i(x_i)$$

and the variance of the noise on the output is related to the input by the noise function:

$$\sigma_{y_i}^2 = g_i(x_i)$$

where f(.) and g(.) are monotonically increasing (or constant) functions for $x_i > 0$. When a sub-channel is not activated (or switched OFF) it transmits no signal and transmits no noise.

That is f(.) and g(.) are zero for $x_i \leq 0$ (note that f(.) and g(.) may be step functions), such that:

$$y_i = \begin{bmatrix} f(x_i) & x_i > 0 \\ 0 & x_i \leq 0 \end{bmatrix}$$

The threshold applied by the threshold switch 4 for each sub-channel has a constant value $\theta_i(t) = \theta_i > 0$, such that the channel is activated when the input signal is greater than $\theta_i$ and switched off when the input is below or equal to $\theta_i$. Each sub-channel receives the same original input signal, so that;

$$y_i = f_i(x - \theta_i)$$

and

$$\sigma^2_{y_i} = g_i(x - \theta_i).$$

The demultiplexor combines all the sub-channels by a weighted addition of their outputs with constant weights $w_i(t) = w_i$, so that the combined output signal is given by:

$$y(x) = \sum_{i=1}^{N} w_i f_i(x - \theta_i) \tag{1}$$

and the output noise variance is given by:

$$\sigma^2_y(x) = \sum_{i=1}^{N} w_i^2 g_i(x - \theta_i) \tag{2}$$

The relationship between the output signal, $y(x)$, and the output variance $\sigma^2_y(x)$ is determined by the properties of the sub-channels $f_i(x)$, $g_i(x)$, and the choice of weights $w_i$ and thresholds $\theta_i$. For proportional noise it is required that $\sigma_y(x) = |y(x)|$.

For a large plurality of sub-channels, the weights and threshold can be found analytically. This can be illustrated with a unity gain system and shown that by suitable choices for $f(.)$, $g(.)$, $w_i$, and the $\theta_i$ it can be arranged so that, as $N \to \infty$,

$$y \to x$$

and

$$\sigma_y \to ky,$$

which is proportional noise with $k$ being the constant of proportionality.

To show this, it is assumed that the number of channels is sufficiently large to replace summations by integration. Denote $\rho(x)$ as the number of sub-channels with threshold $\theta = x$ (i.e. the number of sub-channels activated for any instantaneous value of $x$), $y_x$ as the output of each of these sub-channels and $w(x)$ as the output weight of each of these sub-channels. Then from equations (1) and (2) it follows that:

$$y = x = \int_0^{x_{max}} w(x')\rho(x')y_x(x')dx' \tag{3}$$

and

$$\sigma^2 = k^2 x^2 = \int_0^{x_{max}} w^2(x')\rho(x')y_x(x')dx' \tag{4}$$

Since it is required that $y_i$ and $\sigma_y$ are zero for $x \leq \theta_i$, equations (3) & (4) can be rewritten as convolution integrals:

$$y = x = \int_0^x w(x')\rho(x')f_x(x - x')dx' \tag{5}$$

$$\sigma_y^2 = k^2 x^2 = \int_0^x w^2(x')\rho(x')g_x(x - x')dx' \tag{6}$$

which are called the continuous 'recruitment equations' (see example 2 below).

Equations (5) and (6) can be solved in some circumstances for $w(x)$ and $\rho(x)$ given the functional forms of $f(.)$ and $g(.)$. In practical terms, the equations may best be solved using known numerical techniques.

The system thus described above is for positive input signals. For negative input signals a similar channel is used, wherein the signs of the input and output signals and thresholds levels are reversed. For bipolar input signals, two channels (each with its own sub-channels) are required, one for positive and the other for negative input signals.

The above methodology encompasses the present invention in a general case for all functional forms of $f(.)$ and $g(.)$. Depending on $f(.)$ and $g(.)$ there may be circumstances in which equations (5) and (6) are not solvable and thus values for $w(x)$ and $\rho(x)$ can not be determined.

In examples 1 and 2 below the above general methodology of the present invention is applied to particular cases.

## Example 1- The Simple Conductor Sub-channel.

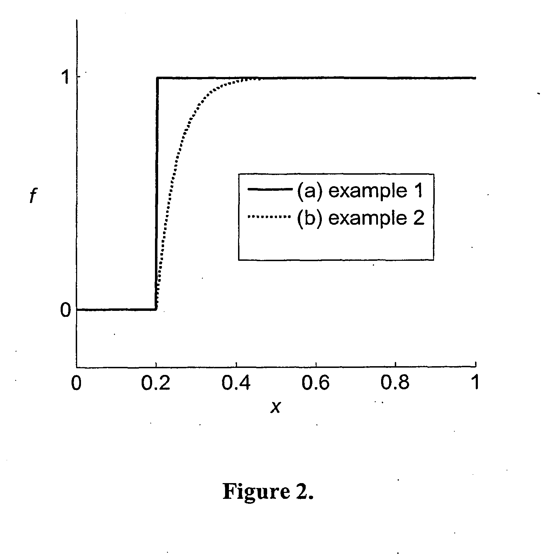

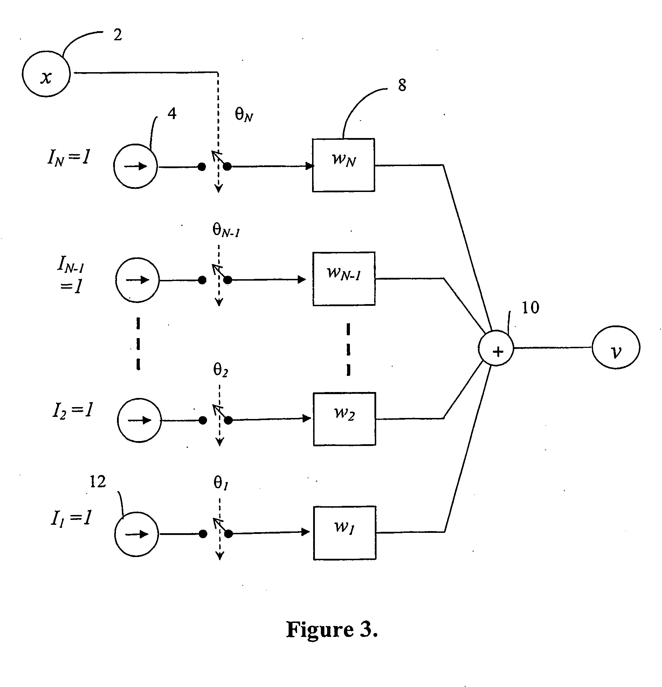

In this, the simplest example, each sub-channel is either ON or OFF. Although the substance of a sub-channel is arbitrary, in this example each sub-channel is considered to be a single electrical conductor carrying either zero (1=0; OFF) or unit (1=1; ON) current. This is schematically illustrated in Figure 3, which shows an arrangement similar to that shown in Figure 1 with the exceptions that the input signal 2 is only provided to the threshold inputs of each of the threshold switches 4, which in turn have their inputs connected to unit current sources 12. Each sub-channel thus simply either passes unit current I (ON) when the input signal exceeds the threshold level or is switched off. Thus, the overall gain function is a step function, as illustrated in Figure 2a.

The currents of all sub-channels are summed at the output with weights $w_i$ to yield the output current $y$. When a sub-channel is OFF, it generates no noise, and when ON it generates noise with standard deviation c. Sub-channel noises are assumed to be independent. Each sub channel has a threshold level, $\theta_i$. When the input signal, x, is below a sub-channel threshold, $x \leq \theta_i$, the sub-channel is OFF. When the input signal exceeds the threshold, $x > \theta_i$, the sub-channel is ON.

To find the weights and threshold density function required to generate Proportional Noise when there is a large number of sub-channels the response of each sub-channel is written as:

$$y_i = u(x - \theta_i)$$

where

$$u(z) = \begin{bmatrix} 1 & z > 0 \\ 0 & z \leq 0 \end{bmatrix},$$

is the unit step function. The noise function is similarly:

$$\sigma_y^2 = c^2 u(x - \theta_i),$$

where c is a constant that is determined by the sub-channel noise. The output of a sub-channel does not change with increasing input, once it is switched on. Therefore. eq.5 simplifies to:

$$y = x = \int_0^x w(x')\rho(x')dx',\qquad(7)$$

which requires that

$$w(x)\rho(x) = 1.\qquad(8)$$

Eq:6, becomes:

$$\sigma_y^2 = k^2 x^2 = \int_0^x c^2 w^2(x')\rho(x')dx'.\qquad(9)$$

Substituting eq.8 into eq.9, yields:

$$w(x) = 2k^2 x/c^2,\qquad(10)$$

and from the above expression for $\sigma_y^2$, the density distribution of thresholds is therefore:

$$\rho(x) = c^2/2k^2 x.$$

These distributions indicate that stronger (i.e. higher $w_i$) sub-channels need to be recruited at higher input signal strengths, and that there should be fewer of them than weaker sub-channels.

In practice it is not possible produce proportional noise down to $x = 0$ because of the singularity in $\rho(x)$ in this embodiment. Therefore a lower bound of $x = \varepsilon$ is applied to the input signal so that the range becomes $\varepsilon \le x \le x_{max}$, where $\varepsilon$ depends on the total number of sub-channels. Thus:

$$N = \int_\varepsilon^{x_{max}} \rho(x)dx = c^2 \ln(x_{max}/\varepsilon)/2k^2 \qquad(11)$$

or

$$k^2 = \frac{c^2}{2N}\ln(x_{max}/\varepsilon).\qquad(12)$$

There is therefore a trade-off between $\varepsilon$ , $N$, and the noise coefficients $c, g$, and $k$.

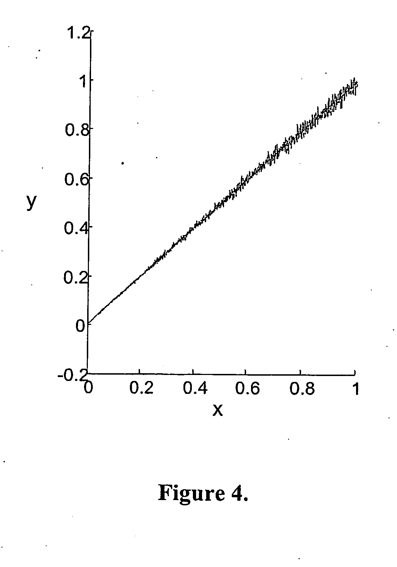

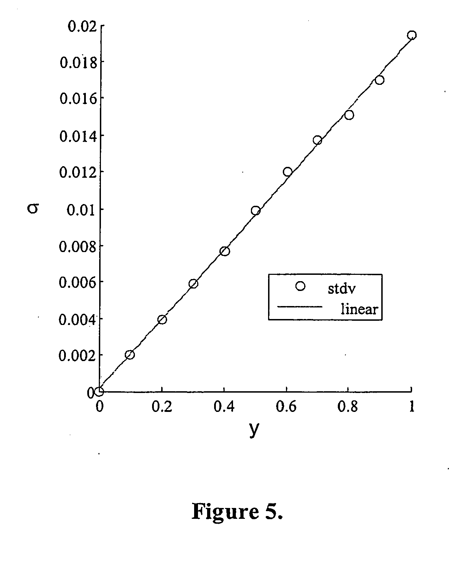

To demonstrate the system , this embodiment was computer simulated with 10,000 sub-channels. The input range was 0.001 - 1.0, and c was set to unity. Figure 4 shows the output for an input ramping over the range. As can be seen, the output is a linear function of the input with unity gain, and the noise increases with output signal. Figure 5 shows the standard deviation of the output against the mean output for input held constant at different levels over the range, and clearly demonstrates Proportional Noise as indicated by the linear regression line.

## Illustrative Example 2 - A Neuromorphic System

In this further, more complex example the response function and the noise function are <u>not</u> step functions and the example illustrates an artificial neural network. Here each sub-channel represents a neuron whose output is a signal $y_i$ representing firing rate and the neuron output noise $\sigma^2_{y_i}$ is given by a renewal process (such as a Poisson process) where the variance (*not the standard deviation*) is proportional to the mean output:

$$\sigma^2_{y_i} = F \, y_i$$

and $F$ is a constant (often called the 'Fano number'). Based on the analogy to real excitatory neurons, the output firing rate is arranged to increase with the input signal once the threshold has been exceeded, as illustrated in Figure 2b. If the input does not exceed the threshold, the neuron is switched off and there is no output signal or output noise. In this embodiment the neural response is modelled by:

$$y_i = \begin{bmatrix} A_i - A_i \exp(-\alpha_i(x - \theta_i)) & x_i > \theta_i \\ 0 & x_i \leq \theta_i \end{bmatrix}$$

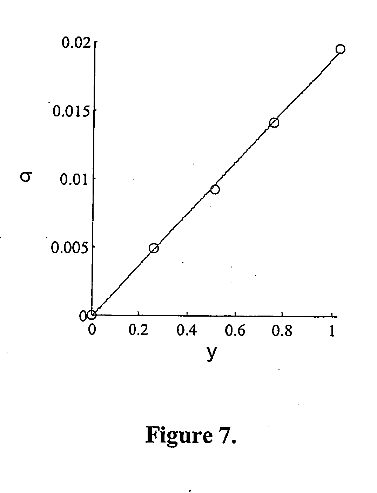

where $A_i$ is the maximal firing rate of the neuron, and $\alpha_i$ is a rise-time constant, as shown in Figure 7. The required weights and threshold density function for the system to generate proportional noise. For simplicity it is assumed that all neurons have the same rise-time, $\alpha$ , and the same maximal firing rate, $A$ . The recruitment equations (eqs. 5 & 6) thus become:

$$x = \int_0^x w(x')\rho(x').u(x - x')[A - A\exp(-\alpha(x - x'))]dx' \tag{13}$$

$$k^2x^2 = F\int_0^x w^2(x')\rho(x')u(x - x')[A - A\exp(-\alpha(x - x'))]dx' \tag{14}$$

These can be solved by taking Laplace transforms. First, define $p(x) = w(x)\rho(x)$ and $q(x) = w^2(x)\rho(x)$, then taking Laplace transform of eq 13:

$$\frac{1}{s^2} = P(s)\frac{A\alpha}{s(s + \alpha)} \tag{15}$$

where transforms are shown in upper case, and s is the Laplace variable. Thus:

$$P(s) = \frac{(s+\alpha)}{sA\alpha} = \frac{1}{A\alpha} + \frac{1}{As}$$

so that

$$p(x) = w(x)\rho(x) = \frac{1}{A\alpha}\delta(x) + \frac{1}{A}u(x) \qquad (16)$$

Similarly, the transform of eq 14 is:

$$\frac{2k^2}{s^3} = Q(s)\frac{A\alpha F}{s(s+\alpha)},$$

and:

$$Q(s) = \frac{2k^2(s+\alpha)}{s^2 AF\alpha} = \frac{2k^2}{AF\alpha s} + \frac{2k^2}{AFs^2}$$

thus

$$q(x) = w^2(x)\rho(x) = \frac{2k^2}{AF}\left(u(x)/\alpha + x\right).$$

Since $w(x) = q(x)/p(x)$,

$$w(x) = \frac{2k^2}{F}(1/\alpha + x), \quad x > 0$$

$$\rho(x) = \frac{F}{2Ak^2}\left(\frac{1}{1/\alpha + x}\right), \quad x > 0$$

At $x = 0$, $w(0)$ and $\rho(0)$ are set to values that approximate the delta function in en.16. It is noted that

$$p(0) = w(0)\rho(0) = \frac{1}{A\alpha}\delta(0) + \frac{1}{A}, \text{ and } q(0) = w^2(0)\rho(0) = \frac{2k^2}{AF\alpha}.$$

This system was computer simulated with 10,000 sub-channels, with the results shown in Figure 7.
For a small plurality of sub-channels (100's), the continuous equations are not accurate and the discrete equations 1 and 2 require solving. In general this is not possible analytically and numerical methods are required. When the sub-channel properties are specified, the best weights and thresholds can be found by one of many numerical minimisation methods to minimise a suitable loss function, such as least squares:

$$Loss = \int_0^{x_{max}} \left[ y(x) = \sum_{i=1}^{N} w_i f_i(x - \theta_i) \right]^2 + \lambda \left[ ky^2(x) - \sum_{i=1}^{N} w_i^2 g_i(x - \theta_i) \right]^2 dx$$

where $\lambda$ is a positive weighting constant.

The applications in which embodiments of the present invention may be applied include various neuromorphic applications. Neuromorphic technology is based on the principles of building machines or systems that have similar performance capabilities to humans and/or animals, that are adaptable and self-organising and that are robust to changing environments. Typical applications of neuromorphic systems are sensory systems, bio robots, neuron modelling, unsupervised learning (self-adapting apparatus or systems) and pattern recognition. Examples of these include silicon retinas, cochleas and prosthetic limbs. Other applications include silicon neurological systems, in which simulated neurons are produced on a silicon chip.

By utilising the communication channel configuration scheme of the present invention within the above mentioned applications, it is expected that the responses and behaviour of the simulated systems and apparatus will more closely follow the actual behaviour of the corresponding systems found in nature, thus improving on the artificial systems.

## Claims

1. A method of configuring a communication channel prior to the transmission of an input signal (2) along the communication channel, the communication channel comprising a plurality of sub-channels (6), the method being **characterised by** comprising determining the strength of the input signal (2) and in accordance with the determined signal strength, selecting a set of the plurality of sub-channels (6) and transmitting said input signal along the set of sub-channels in parallel, wherein each of the sub-channels (6) has a predetermined noise characteristic such that the set of selected sub-channels exhibits a combined noise characteristic in which the standard deviation of the noise is proportional to the input signal strength.

2. A method according to claim 1, wherein each sub-channel (6) is selected only if the instantaneous input signal (2) strength exceeds an individual threshold value associated with each sub-channel.

3. A method according to claim 1 or 2, wherein the noise characteristic of each sub-channel (6) is defined by a gain function associated with each sub-channel (6) and a constant weighting value $w_i$ applied to the output of each sub-channel.

4. A method according to claim 3, wherein for a given gain function the threshold value and weighting value for each sub-channel (6) are selected such that the combined noise characteristic of the communication channel exhibits proportional noise.

5. A method according to claim 4, wherein the distribution of the weighting values w(x) and the distribution of sub-channels (6) having a threshold value equal to the instantaneous signal strength p(x) is given by solving the equations

$$y = x = \int_0^{x_{max}} w(x')\rho(x')y_x(x')dx'$$

and

$$\sigma^2 = k^2 x^2 = \int_0^{x_{max}} w^2(x')\rho(x')y_x(x')dx'$$

where $y$ is the instantaneous combined output signal value, $\sigma$ is standard deviation of the noise function and $k$ is a constant of proportionality.

6. A method according to claim 4, wherein the threshold values and weighting values are selected by solving the equations

$$y(x) = \sum_{i=1}^{N} w_i f_i (x - \theta_i)$$

and

$$\sigma_y^2(x) = \sum_{i=1}^{N} w_i^2 g_i (x - \theta_i)$$

where $\theta_i$ is the threshold value for the ith sub-channel.

7. A method according to claims 5 or 6, wherein the equations are solved by numerical methods.

8. A method according to any one of claims 3 to 7, wherein the gain function for each sub-channel comprises a step function, the input signal (2) has a minimum instantaneous value $\varepsilon$ and the total number N of sub-channels (6) is determined according to the equation $N = \int_{\varepsilon}^{x_{max}} \rho(x)dx$ .

9. A method according to any one of claims 3 to 7, wherein each sub-channel (6) is arranged to simulate a neuron within a neural network such that the distribution of weighting values $w(x)$ and the distribution of sub-channels (6) having a threshold value equal to the instantaneous signal strength $\rho(x)$ is given by solving the equations

$$w(x) = \frac{2k^2}{F}(1/\alpha + x)$$

and

$$\rho(x) = \frac{F}{2Ak^2}\left(\frac{1}{1/\alpha + x}\right)$$

for $x > 0$, where $k$ is a constant, $F$ is the Fano number for the sub-channel renewal process, $\alpha$ is a rise-time constant for the simulated neurons and $A$ is the maximal firing rate for the simulated neurons.

10. Apparatus for configuring a communication channel comprising a plurality of sub-channels (6), **characterised by** each sub-channel having a threshold switch (4) arranged to receive an input signal (2) having an instantaneous signal value and to connect the sub-channel (6) to the input signal (2) only if the instantaneous signal value exceeds a predetermined threshold value, the apparatus further comprising a summator (10) arranged to receive the output of each sub-channel (6) and combine said outputs to provided a combined output signal, wherein each sub-channel (6) has a predetermined noise characteristic such that the connected sub-channels exhibit a combined noise characteristic in which the standard deviation of the noise is proportional to the input signal (2) strength.

11. Apparatus according to claim 10, wherein each sub-channel (6) includes a constant gain unit (8) arranged to apply a constant weighting value $w_i$ to the output of each sub-channel (6) prior to the output being provided to the summator (10) and each sub-channel has a further gain function associated with it, such that the noise characteristic of each sub-channel is defined by said gain function and said constant weighting value $w_i$.

12. Apparatus according to claim 11, wherein the distribution of the weighting values w(x) and the distribution of sub-channels (6) having a threshold value equal to the instantaneous signal strength $\rho(x)$ is given by the equations

$$y = x = \int_0^{x_{max}} w(x')\rho(x')y_x(x')dx'$$

and

$$\sigma^2 = k^2 x^2 = \int_0^{x_{max}} w^2(x')\rho(x')y_x(x')dx'.$$

where $y$ is the instantaneous combined output signal value, $\sigma$ is standard deviation of the noise function and $k$ is a constant of proportionality.

13. Apparatus according to claim 11, wherein the threshold values and weighting values are given by the equations

$$y(x) = \sum_{i=1}^{N} w_i f_i(x - \theta_i)$$

and

$$\sigma_y^2(x) = \sum_{i=1}^{N} w_i^2 g_i(x - \theta_i)$$

where $\theta_i$ is the threshold value for the $i$th sub-channel.

14. Apparatus according to any one of claims 11 to 13, wherein the gain function for each sub-channel (6) comprises a step function, the input signal has a minimum instantaneous value $\varepsilon$ and the total number N of sub-channels is determined according to the equation $N = \int_{\varepsilon}^{x_{max}} \rho(x)dx$.

15. Apparatus according to claim 11, wherein each sub-channel (6) is arranged to simulate a neuron within a neural network such that the distribution of weighting values $w(x)$ and the distribution of sub-channels (6) having a threshold value equal to the instantaneous signal strength $\rho(x)$ is given by solving the equations

$$w(x) = \frac{2k^2}{F}(1/\alpha + x)$$

and

$$\rho(x) = \frac{F}{2Ak^2}\left(\frac{1}{1/\alpha + x}\right)$$

**Patentansprüche**

1. Verfahren zur Konfigurierung eines Kommunikationskanals vor der Übertragung eines Eingangssignals (2) entlang des Kommunikationskanals, wobei der Kommunikationskanal eine Vielzahl von Nebenkanälen (6) umfasst, wobei das Verfahren **dadurch gekennzeichnet ist, dass** es die Bestimmung der Stärke des Eingangssignals (2) und in Übereinstimmung mit der bestimmten Signalstärke die Auswahl eines Satzes der Vielzahl von Nebenkanälen (6) und die parallele Übertragung des Eingangssignals entlang des Satzes der Nebenkanäle umfasst, wobei jeder der Nebenkanäle (6) eine vorherbestimmte Rauschcharakteristik aufweist, so dass der Satz gewählter Nebenkanäle eine kombinierte Rauscheigenschaft aufweist, bei der die Standardabweichung des Rauschens proportional zu der Eingangssignalstärke ist.

2. Verfahren nach Anspruch 1, bei dem jeder Nebenkanal (6) nur gewählt wird, wenn die Stärke des momentanen Eingangssignals (2) einen individuellen Schwellwert überschreitet, der jedem Nebenkanal zugeordnet ist.

3. Verfahren nach Anspruch 1 oder 2, bei dem die Rauscheigenschaft jedes Nebenkanals (6) durch eine jedem Nebenkanal (6) zugeordnete Verstärkungsfunktion und einen konstanten Gewichtungswert $w_i$ definiert wird, der am Ausgang jedes Nebenkanals angewendet wird.

4. Verfahren nach Anspruch 3, bei dem für eine gegebene Verstärkungsfunktion der Schwellwert und der Gewichtungswert für jeden Nebenkanal (6) so gewählt werden, dass die kombinierte Rauscheigenschaft des Kommunikationskanals ein proportionales Rauschen aufweist.

5. Verfahren nach Anspruch 4, bei dem die Verteilung der Gewichtungswerte w(x) und die Verteilung der Nebenkanäle (6), die einen Schwellwert aufweisen, der gleich der momentanen Signalstärke p(x) ist, durch Lösung der Gleichungen

$$y = x = \int_0^{x_{max}} w(x')\rho(x')y_x(x')dx'$$

und

$$\sigma^2 = k^2x^2 = \int_0^{x_{max}} w^2(x')\rho(x')y_x(x')dx'$$

erhalten wird, wobei y der momentane kombinierte Ausgangssignalwert ist, σ die Standardabweichung der Rauschfunktion ist und k eine Proportionalitätskonstante ist.

6. Verfahren nach Anspruch 4, bei dem die Schwellwerte und Gewichtungswerte gewählt werden durch Lösung der Gleichungen

$$y(x) = \sum_{i=1}^{N} w_i f_i(x - \theta_i)$$

und

$$\sigma_y^2(\mathsf{x}) = \sum_{i=1}^{N} w_i^2 g_i(x - \theta_i)$$

wobei $\theta_i$ der Schwellwert für den i-ten Nebenkanal ist.

7. Verfahren nach Anspruch 5 oder 6, bei dem die Gleichungen durch numerische Verfahren gelöst werden.

8. Verfahren nach einem der Ansprüche 3 bis 7, bei dem die Verstärkungsfunktion für jeden Nebenkanal eine Schrittfunktion umfasst, das Eingangssignal (2) einen minimalen Momentanwert $\varepsilon$ aufweist und die Gesamtanzahl N der Nebenkanäle (6) gemäß der Gleichung $N = \int_{\varepsilon}^{x_{\max}} \rho(\mathsf{x})d\mathsf{x}$ bestimmt wird.

9. Verfahren nach einem der Ansprüche 3 bis 7, bei dem jeder Nebenkanal (6) zur Simulierung eines Neurons innerhalb eines neuralen Netzwerks konfiguriert ist, so dass die Verteilung der Gewichtungswerte w(x) und die Verteilung der Nebenkanäle (6), die einen Schwellwert aufweisen, der gleich der momentanen Signalstärke p(x) ist, erhalten wird durch Lösung der Gleichungen

$$w(\mathsf{x}) = \frac{2k^2}{F}(1/\alpha + \mathsf{x})$$

und

$$\rho(\mathsf{x}) = \frac{F}{2Ak^2}\left(\frac{1}{1/\alpha + x}\right)$$

für x>0, wobei k eine Konstante ist, F die Fano-Zahl für den Nebenkanal-Erneuerungsprozess ist, $\alpha$ eine Anstiegszeitkonstante für die simulierten Neuronen ist und A die maximale Zündrate für die simulierten Neuronen ist.

10. Vorrichtung zur Konfigurierung eines Kommunikationskanals mit einer Vielzahl von Nebenkanälen (6), **dadurch gekennzeichnet, dass** jeder Nebenkanal einen Schwellenschalter (4) aufweist, der zum Empfang eines Eingangssignals (2) mit einem momentanen Signalwert und zur Verbindung des Nebenkanals (6) mit dem Eingangssignal (2) nur für den Fall konfiguriert ist, dass der momentane Signalwert einen vorherbestimmten Schwellwert überschreitet, wobei die Vorrichtung außerdem eine Summiereinrichtung (10) umfasst, die zum Empfang des Ausgangs jenes Nebenkanals (6) und zur Kombinierung der Ausgänge zur Schaffung eines kombinierten Ausgangssignals konfiguriert ist, wobei jeder Nebenkanal (6) eine vorherbestimmte Rauschcharakteristik hat, so dass die verbundenen Nebenkanäle eine kombinierte Rauscheigenschaft aufweisen, bei der die Standardabweichung des Rauschen proportional zu der Stärke des Eingangssignals ist.

11. Vorrichtung nach Anspruch 10, bei der jeder Nebenkanal (6) eine Einheit (8) für konstante Verstärkung aufweist, die zur Anwendung eines konstanten Gewichtungswerts $w_i$ am Ausgang jedes Nebenkanals (6) vor Bereitstellung des Ausgangs zu der Summiereinrichtung (10) konfiguriert ist und jeder Nebenkanal eine weitere ihm zugeordnete Verstärkungsfunktion aufweist, so dass die Rauscheigenschaft jedes Nebenkanals durch die Verstärkungsfunktion und den konstanten Gewichtungswert $w_i$ definiert ist.

12. Vorrichtung nach Anspruch 11, bei der die Verteilung der Gewichtungswerte w(x) und die Verteilung der Nebenkanäle (6), die einen Schwellwert aufweisen, der gleich der momentanen Signalstärke p(x) ist, erhalten werden durch die Gleichungen

$$y = x = \int_0^{x_{max}} w(x')\rho(x')y_x(x')dx'$$

und

$$\sigma^2 = k^2 x^2 = \int_0^{x_{max}} w^2(x')\rho(x')y_x(x')dx'$$

wobei y der momentane kombinierte Ausgangssignalwert ist, $\sigma$ die Standardabweichung der Rauschfunktion ist und k eine Proportionalitätskonstante ist.

13. Vorrichtung nach Anspruch 11, bei der die Schwellwerte und Gewichtungswerte erhalten werden durch die Gleichungen

$$y(x) = \sum_{i=1}^{N} w_i f_i (x - \theta_i)$$

und

$$\sigma_y^2(x) = \sum_{i=1}^{N} w_i^2 g_i (x - \theta_i)$$

wobei $\theta_i$ der Schwellwert für den i-ten Nebenkanal ist.

14. Vorrichtung nach einem der Ansprüche 11 bis 13, bei der die Verstärkungsfunktion für jeden Nebenkanal (6) eine Schrittfunktion umfasst, das Eingangssignal einen minimalen Momentanwert $\varepsilon$ aufweist und die Gesamtanzahl N der Nebenkanäle gemäß der Gleichung $N = \int_\varepsilon^{x_{max}} \rho(x)dx$ bestimmt wird.

15. Vorrichtung nach Anspruch 11, bei der jeder Nebenkanal (6) zur Simulierung eines Neurons innerhalb eines neuralen Netzwerks konfiguriert ist, so dass die Verteilung der Gewichtungswerte w(x) und die Verteilung der Nebenkanäle (6), die einen Schwellwert aufweisen, der gleich der momentanen Signalstärke p(x) ist, erhalten wird durch Lösung der Gleichungen

$$w(x) = \frac{2k^2}{F}(1/\alpha + x)$$

und

$$\rho(x) = \frac{F}{2Ak^2}\left(\frac{1}{1/\alpha + x}\right)$$

für x>0, wobei k eine Konstante ist, F die Fano-Zahl für den Nebenkanal-Erneuerungsprozess ist, $\alpha$ eine Anstiegszeitkonstante für die simulierten Neuronen ist und A die maximale Zündrate für die simulierten Neuronen ist.

**Revendications**

1. Procédé permettant de configurer une voie de communication avant la transmission d'un signal d'entrée (2) le long de la voie de communication, la voie de communication comprenant une pluralité de sous-voies (6), le procédé étant **caractérisé par** le fait de comprendre la détermination de l'intensité du signal d'entrée (2) et conformément à l'intensité du signal déterminée, la sélection d'un ensemble de la pluralité de sous-voies (6) et la transmission dudit signal d'entrée le long de l'ensemble de sous-voies en parallèle, où chacune des sous-voies (6) a une caractéristique de bruit prédéterminée de sorte que l'ensemble de sous-voies sélectionnées présente une caractéristique de bruit combinée dans laquelle l'écart type du bruit est proportionnel à l'intensité du signal d'entrée.

2. Procédé selon la revendication 1, dans lequel chaque sous-voie (6) est sélectionnée seulement si l'intensité du signal d'entrée (2) instantanée dépasse une valeur de seuil individuelle associée à chaque sous-voie.

3. Procédé selon la revendication 1 ou 2, dans lequel la caractéristique de bruit de chaque sous-voie (6) est définie par une fonction de gain associée à chaque sous-voie (6) et une valeur de pondération constante $w_i$ appliquée à la sortie de chaque sous-voie.

4. Procédé selon la revendication 3, dans lequel pour une fonction de gain donnée, la valeur de seuil et la valeur de pondération pour chaque sous-voie (6) sont sélectionnées de sorte que la caractéristique de bruit combinée de la voie de communication présente un bruit proportionnel.

5. Procédé selon la revendication 4, dans lequel la distribution des valeurs de pondération $w(x)$ et la distribution de sous-voies (6) ayant une valeur de seuil égale à l'intensité du signal instantanée $\rho(x)$ sont données en résolvant les équations

$$y = x = \int_0^{x_{max}} w(x')\rho(x')y_x(x')dx'$$

et

$$\sigma^2 = k^2 x^2 = \int_0^{x_{max}} w^2(x')\rho(x')y_x(x')dx'$$

où $y$ est la valeur du signal de sortie combinée instantanée, $\sigma$ est l'écart type de la fonction de bruit et $k$ est une constante de proportionnalité.

6. Procédé selon la revendication 4, dans lequel les valeurs de seuil et les valeurs de pondération sont sélectionnées en résolvant les équations

$$y(x) = \sum_{i=1}^{N} w_i f_i(x - \theta_i)$$

et

$$\sigma_y^2(x) = \sum_{i=1}^{N} w_i^2 g_i(x - \theta_i)$$

où $\theta_i$ est la valeur de seuil pour la iième sous-voie.

7. Procédé selon la revendication 5 ou 6, dans lequel les équations sont résolues par des méthodes numériques.

8. Procédé selon l'une quelconque des revendications 3 à 7, dans lequel la fonction de gain pour chaque sous-voie comprend une fonction échelon, le signal d'entrée (2) a une valeur instantanée minimum $\varepsilon$ et le nombre total N de sous-voies (6) est déterminé selon l'équation $N = \int_{\varepsilon}^{x_{max}} \rho(x)\,dx$ .

9. Procédé selon l'une quelconque des revendications 3 à 7, dans lequel chaque sous-voie (6) est agencée pour simuler un neurone à l'intérieur d'un réseau neuronal de sorte que la distribution de valeurs de pondération $w(x)$ et la distribution de sous-voies (6) ayant une valeur de seuil égale à l'intensité du signal instantanée $\rho(x)$ soient données en résolvant les équations

$$w(x) = \frac{2k^2}{F}(1/\alpha + x)$$

et

$$\rho(x) = \frac{F}{2Ak^2}\left(\frac{1}{1/\alpha + x}\right)$$

pour $x > 0$, où $k$ est une constante, $F$ est le nombre de Fano pour le processus de renouvellement de sous-voie, $\alpha$, est une constante de temps de montée pour les neurones simulés et A est le taux de décharge maximal pour les neurones simulés.

10. Appareil pour configurer une voie de communication comprenant une pluralité de sous-voies (6), **caractérisé par** chaque sous-voie ayant un commutateur de seuil (4) agencé pour recevoir un signal d'entrée (2) ayant une valeur de signal instantanée et pour connecter la sous-voie (6) au signal d'entrée (2) seulement si la valeur de signal instantanée dépasse une valeur de seuil prédéterminée, l'appareil comprenant en outre un sommateur (10) agencé pour recevoir la sortie de chaque sous-voie (6) et combiner lesdites sorties pour fournir un signal de sortie combiné, où chaque sous-voie (6) a une caractéristique de bruit prédéterminée de sorte que les sous-voies connectées présentent une caractéristique de bruit combinée dans laquelle l'écart type du bruit est proportionnel à l'intensité du signal d'entrée (2).

11. Appareil selon la revendication 10, dans lequel chaque sous-voie (6) inclut une unité à gain constant (8) agencée pour appliquer une valeur de pondération constante $w_i$ à la sortie de chaque sous-voie (6) avant que la sortie ne soit fournie au sommateur (10) et chaque sous-voie a une autre fonction de gain qui y est associée, de sorte que la caractéristique de bruit de chaque sous-voie soit définie par ladite fonction de gain et ladite valeur de pondération constante $w_i$.

12. Appareil selon la revendication 11, dans lequel la distribution des valeurs de pondération $w(x)$ et la distribution de sous-voies (6) ayant une valeur de seuil égale à l'intensité du signal instantanée $\rho(x)$ sont données en résolvant les équations

$$y = x = \int_{0}^{x_{max}} w(x')\rho(x')y_x(x')\,dx'$$

et

$$\sigma^2 = k^2 x^2 = \int_0^{x_{max}} w^2(x')\rho(x')y_x(x')dx'$$

où $y$ est la valeur du signal de sortie combinée instantanée, $\sigma$ est l'écart type de la fonction de bruit et $k$ est une constante de proportionnalité.

**13.** Appareil selon la revendication 11, dans lequel les valeurs de seuil et les valeurs de pondération sont données par les équations

$$y(x) = \sum_{i=1}^{N} w_i f_i(x - \theta_i)$$

et

$$\sigma_y^2(x) = \sum_{i=1}^{N} w_i^2 g_i(x - \theta_i)$$

où $\theta_i$ est la valeur de seuil pour la iième sous-voie.

**14.** Appareil selon l"une quelconque des revendications 11 à 13, dans lequel la fonction de gain pour chaque sous-voie (6) comprend une fonction échelon, le signal d'entrée a une valeur instantanée minimum $\varepsilon$ et le nombre total N de sous-voies (6) est déterminé selon l'équation $N = \int_\varepsilon^{x_{max}} \rho(x)dx$.

**15.** Appareil selon la revendication 11, dans lequel chaque sous-voie (6) est agencée pour simuler un neurone à l'intérieur d'un réseau neuronal de sorte que la distribution de valeurs de pondération $w(x)$ et la distribution de sous-voies (6) ayant une valeur de seuil égale à l'intensité du signal instantanée $\rho(x)$ soient données en résolvant les équations

$$w(x) = \frac{2k^2}{F}(1/\alpha + x)$$

et

$$\rho(x) = \frac{F}{2Ak^2}\left(\frac{1}{1/\alpha + x}\right)$$

pour $x > 0$, où $k$ est une constante, $F$ est le nombre de Fano pour le processus de renouvellement de sous-voie, $\alpha$ est une constante de temps de montée pour les neurones simulés et $A$ est le taux de décharge maximal pour les neurones simulés.

**Figure 1.**

**Figure 2.**

**Figure 3.**

**Figure 4.**

**Figure 5.**

**Figure 6.**

**Figure 7.**

**EP 1 929 674 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2265036 A